# EUROPÄISCHE PATENTSCHRIFT

(11) **EP 0 401 571 B1**
(45) Veröffentlichungstag und Bekanntmachung des Hinweises auf die Patenterteilung: **24.02.1993**
(21) Anmeldenummer: 90109330.2
(22) Anmeldetag: 17.05.1990
(51) Int. Cl.: F28F 9/00

(54) **Wärmetauscher zur Kühlung des Kühlwassers und der Ladeluft eines Verbrennungsmotors**
Heat-exchanger for cooling the cooling water and the charging air of an internal-combustion engine
Echangeur de chaleur pour refroidir l'eau de refroidissement et l'air comprimé d'un moteur à combustion interne

(30) Priorität: 03.06.1989 DE 3918176
(43) Veröffentlichungstag der Anmeldung: 12.12.1990
(73) Patentinhaber: Behr GmbH & Co., D-70469 Stuttgart (DE)
(72) Erfinder: Ghiani, Franco, D-7120 Bietigheim-Bissingen (DE); Kull, Reinhard, D-7140 Ludwigsburg (DE)
(74) Vertreter: Hosenthien, Heinz

(56) Entgegenhaltungen:
- DE-A- 3 200 682
- FR-A- 2 188 680
- US-A- 3 229 760
- US-A- 4 138 857
- US-A- 4 531 574

## Beschreibung

Die Erfindung betrifft einen Wärmetauscher zur Kühlung des Kühlwassers und der Ladeluft eines Verbrennungsmotors, mit einem Luft-Wasserkühler für das Kühlwasser und einem Luft-Luftkühler für die Kühlung der komprimierten Ladeluft, wobei der Luft-Luftkühler in Luftdurchströmrichtung vorzugweise vor dem Luft-Wasserkühler angeordnet ist und der Luft-Wasserkühler seitliche Befestigungsvorsprünge und/oder Ausnehmungen zur Befestigung an einem Trägergestell, insbesondere eines Fahrzeugs, aufweist und zusätzliche Befestigungsmittel für den Luft-Luftkühler aufweist, in die dieser mit zugeordneten Vorsprüngen eingehängt und gehalten ist.

Bei einem solchen aus der FR-A-21 88 680 bekannten Wärmetauscher dienen als Befestigungsmittel angeschraubte bzw. angelötete Blechlaschen. Die Befestigung dieser zusätzlichen Teile ist zeitaufwendig und erhöht das Konstruktionsgewicht. Auch bei der Wartung und Reparatur ist ein erhöhter Zeitaufwand erforderlich.

Aus der US-A-4 138 857 ist die Anordnung zweier Kühler bekaut, die über Blechlaschen miteinander verbunden sind. Eine Kombination Metall - Kunststoff, wie sie bei gewichtseinsparenden modernen Konstruktionen eingesetzt werden, ist hier nicht möglich.

Es ist ferner bekannt, den Luft-Luftkühler mit dem Luft-Wasserkühler zu einer Einheit zu verschrauben. Hier bestehen aber die gleichen Nachteile bei Montage und Wartung.

In Vermeidung der geschilderten Nachteile liegt der vorliegenden Erfindung die Aufgabe zugrunde, einen Wärmetauscher der eingangs genannten Art so auszubilden, daß Montage und Wartung zeitsparend rasch mit wenigen Handgriffen möglichst ohne Werkzeug erfolgen können.

Zur Lösung dieser Aufgabe sieht die Erfindung vor, daß die Vorsprünge des Luft-Luftkühlers mit dessen Ladeluft-Anschlußstutzen integriert sind, wobei diese Ladeluft-Anschlußstutzen den Luft-Luftkühler seitlich überragen und am Luft-Wasserkühler seitlich vorbeigeführt sind, daß ferner durch die Vorsprünge des Luft-Luftkühlers und die zugeordneten Befestigungsmittel des Luft-Wasserkühlers der Luft-Luftkühler gegenüber dem Luft-Wasserkühler zentriert gehalten ist.

Durch die einfache Ermöglichung eines Einhängens werden bei der Montage und Demontage des Luft-Luftkühlers keine Werkzeuge benötigt und keine losen Befestigungsmittel, die normalerweise noch zusätzlich wegen der immer auftretenden Vibrationen gesichert werden müssen.

Zweckmäßigerweise sind die Vorsprünge des Luft-Luftkühlers zur Einhängung in den Befestigungsmitteln des Luft-Wasserkühlers etwa symmetrisch zum Schwerpunkt des Luft-Luftkühlers angeordnet, so daß im Betrieb auftretende Massenkräfte direkt aufgenommen werden und so die Werkstoffbeanspruchung der üblicherweise aus Kunststoff bestehenden Teile niedrig gehalten ist. Unerwünschte Kippmomente können beim Abfangen der auftretenden Massenkräfte im Schwerpunktbereich überhaupt nicht entstehen.

Eine selbsttätige Lösung des Luft-Luftkühlers vom Luft-Wasserkühler kann dadurch sicher verhindert werden, daß die Enden der Einführschrägen Haltenasen der Vorsprünge des Luft-Luftkühlers hinterschnappen. Besonders einfach können die Einführvorsprünge durch elastisch federnd ausgebildete Kunststoffzungen gebildet sein, die selbst wieder Verlängerungen von parallelen Rippen sein können, die seitlich am Luft-Luftkühler überstehen.

Der Herstell- und Montageaufwand kann bei gleichzeitiger Verringerung des Konstruktionsgewichts dadurch noch vermindert werden, daß die Befestigungsmittel des Luft-Wasserkühlers einstückig mit dem aus Kunststoff bestehenden Wasserkasten integriert sind.

Eine besonders günstige Kraftübertragung kann dadurch erreicht werden, daß die am Ladeluft-Stutzen angeordneten Vorsprünge zwei parallel im bestand angeordnete Rippen sind, die jeweils eine Haltenase aufweisen, und daß die beiden Haltenasen sich auf dem gabelförmig ausgebildeten Befestigungsmittel abstützen und der unter den Haltenasen befindliche Teil der parallelen Rippen zwischen dem gabelförmig ausgebildeten Befestigungsmittel des Wasser-Luftkühlers aufgenommen ist. Das gabelförmig ausgebildete Befestigungsmittel kann durch zwei im Querschnitt U-förmige Rippenvorsprünge gebildet sein, die zwei parallel im Abstand voneinander angeordnete Rippen aufweisen, an deren Enden sich nach außen weisende Querrippen anschließen.

Zur Verhinderung einer gegenseitigen Kippbewegung zwischen dem Luft-Wasserkühler und dem Luft-Luftkühler kann mit Abstand, unterhalb dem Ladeluft-Anschlußstutzen als weiteres Befestigungsmitel ein nach oben offener Aufnahmeschlitz, im Luft-Wasserkühler und am Luft-Luftkühler als weiterer Vorsprung ein nach unten abgewinkelter L-Schenkel vorgesehen sein, dessen Ende vom oben offenen Aufnahmeschlitz gehalten ist. Der weitere Vorsprung in Form des L-Schenkels kann einstückig mit dem vorzugsweise aus Kunststoff bestehenden Luftkasten des Luft-Luftkühlers integriert sein.

Zur weiteren Kraftübertragung können am oberen Ende des Luft-Wasserkühlers und des Luft-Luftkühlers einander zugeordnete, vertikale Anlageflächen vorgesehen sein.

Weitere Ausbildungen der Erfindung sind den Unteransprüchen zu entnehmen und werden mit ihren Vorteilen anhand der beigefügten Zeichnungen in der nachstehenden Beschreibung näher erläutert. Es zeigt:

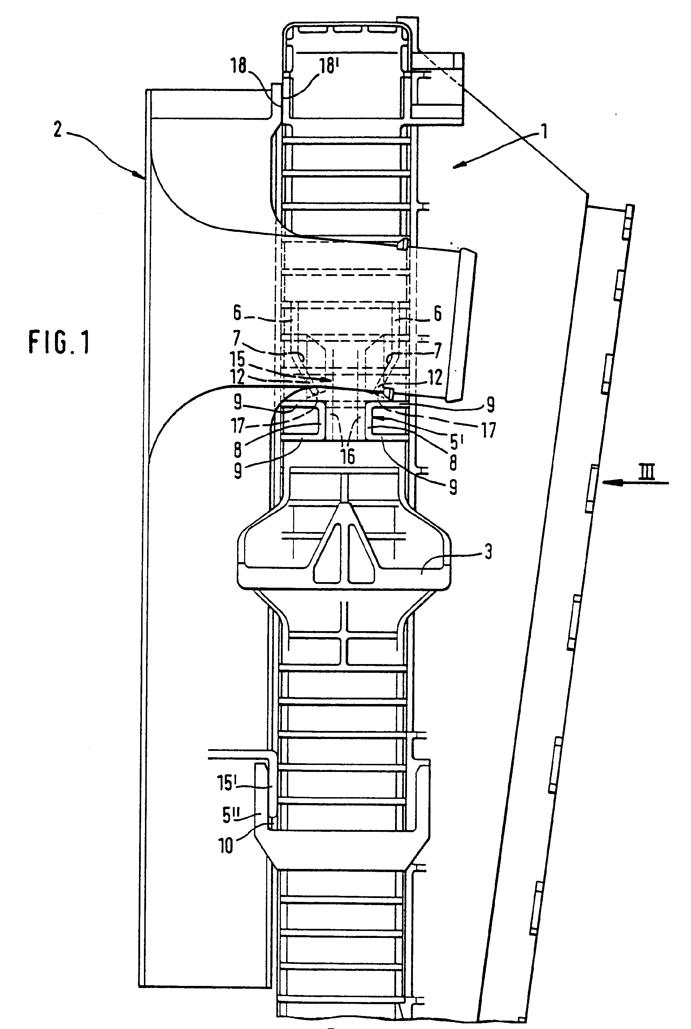

Figur 1 eine Teil-Seitenansicht eines aus einem Luft-Luftkühler und Luft-Wasserkühler zusammengesetzen Wärmetauschers,
Figur 2 eine der Figur 1 entsprechende Ansicht des Luft-Wasserkühlers allein,

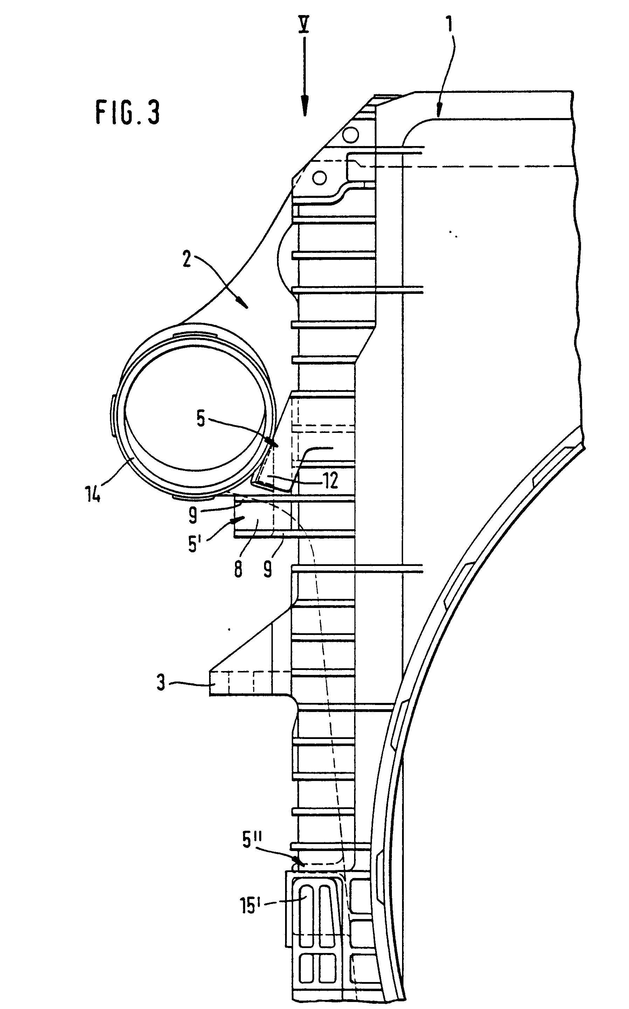

Figur 3 eine Ansicht des in Figur 1 dargestellten Wärmetauschers in Richtung des Pfeils III in Figur 1,
Figur 4 eine der Figur 3 entsprechende Teilansicht des Luft-Wasserkühlers allein in größerem Maßstab,
Figur 5 eine Teildraufsicht in Richtung des Pfeils V des in Figur 3 dargestellten Wärmetauschers und
Figur 6 eine der Figur 5 entsprechende Draufsicht auf den Wasser-Luft-Wärmetauscher allein in größerem Maßstab.

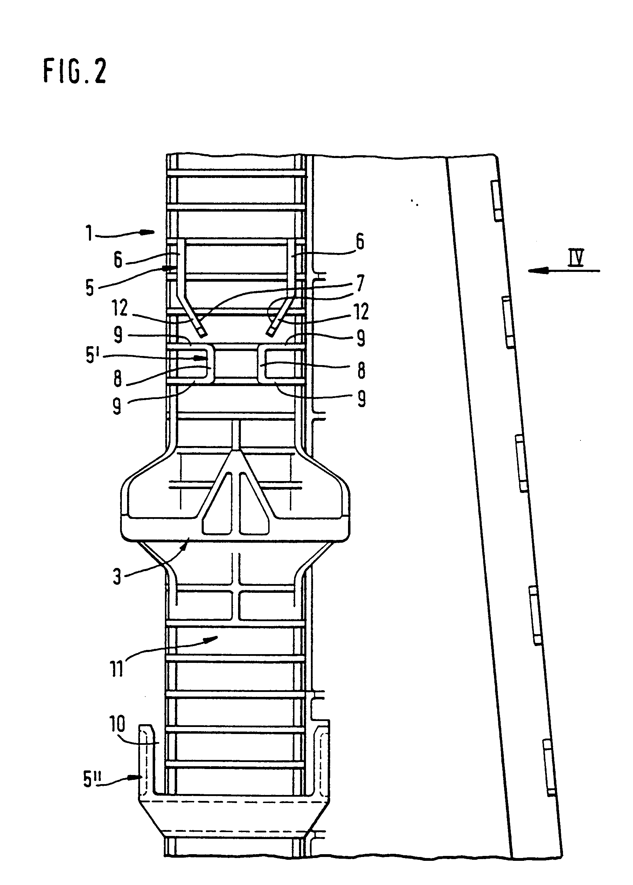

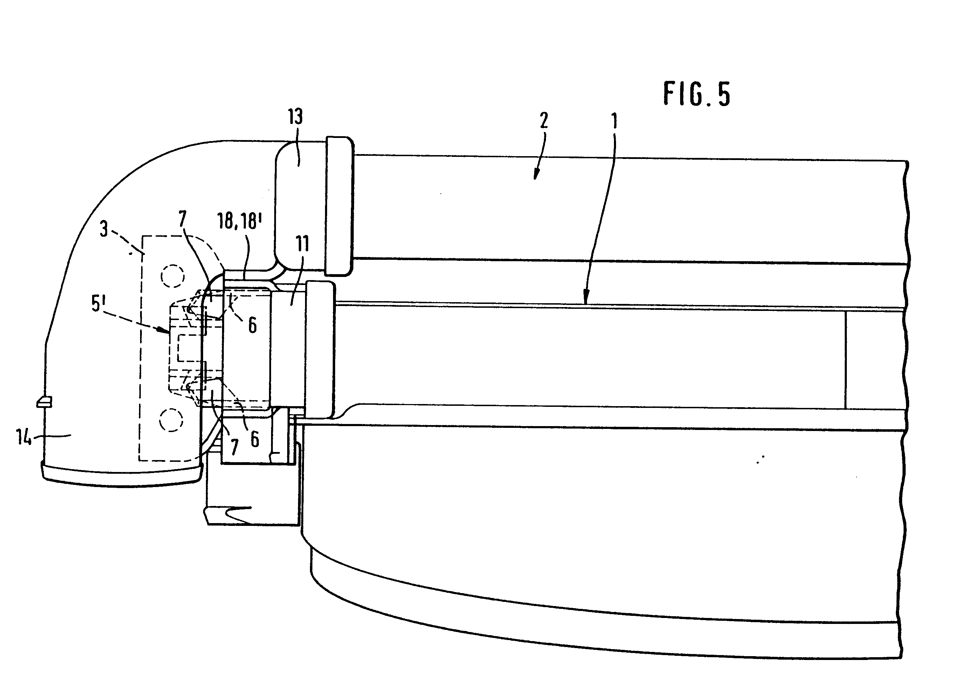

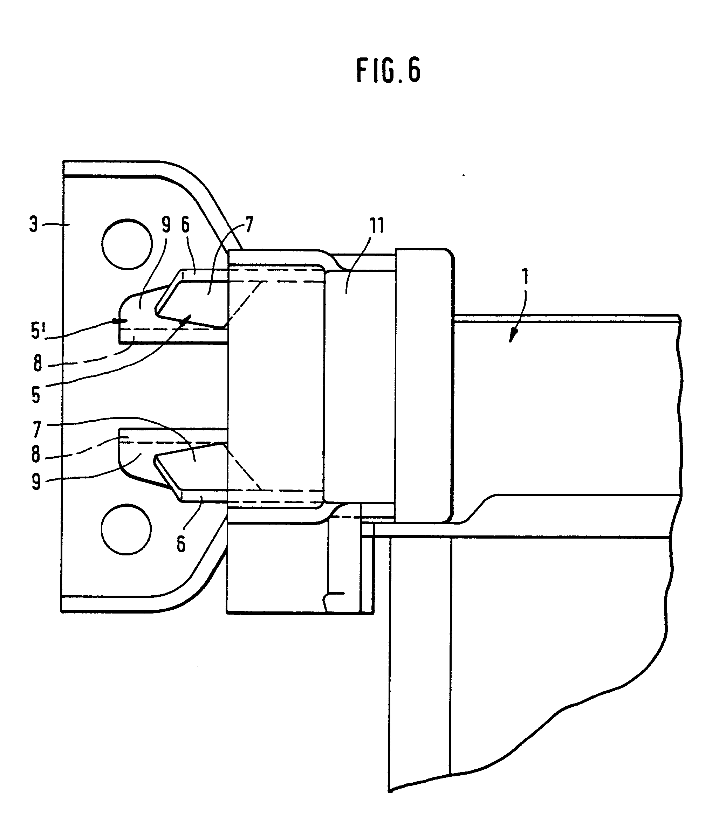

Beim einzigen dargestellten Ausführungsbeispiel weist der Wärmetauscher einen Luft-Wasserkühler 1 auf zur Kühlung des Kühlwassers eines Verbrennungsmotors und einen Luft-Luftkühler 2 für die Abkühlung der komprimierten Ladeluft. Der Luft-Wasserkühler 1, von dem in den Figuren 2, 4, 5 und 6 nur der linke Teil dargestellt ist, ist im wessentlichen symmetrisch zu seiner Hochachse ausgebildet. Er trägt in der Höhe seines Schwerpunkts seitlich vorspringende pratzenartige, durch Rippen versteifte Befestigungsvorsprünge 3, die mit dem Wasserkasten 4 des Luft-Wasserkühlers 1, der aus Kunststoff besteht, integriert sind.

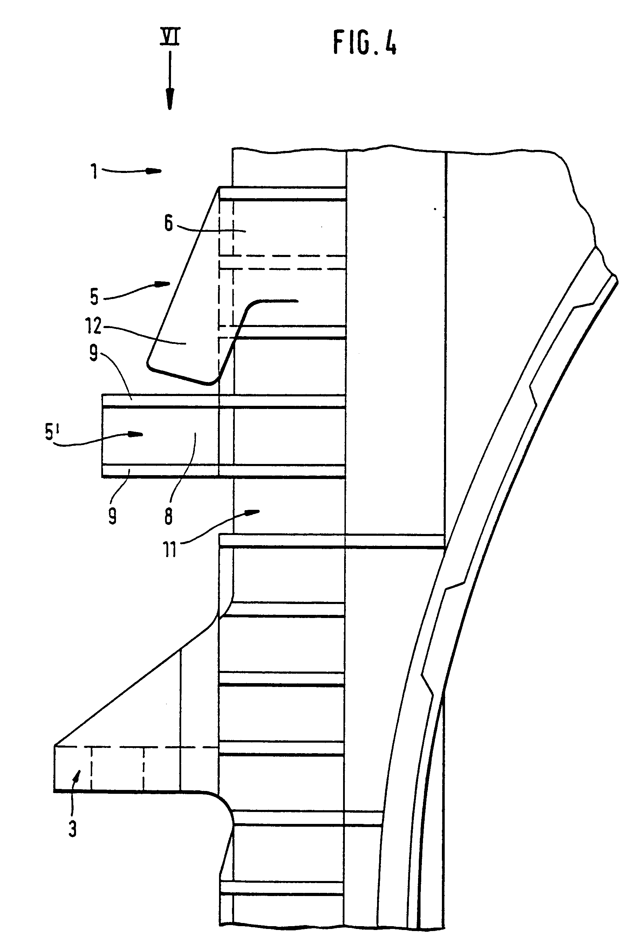

Oberhalb der Befestigungsvorsprünge 3 sind Befestigungsmittel 5, 5′ für die Aufnahme des Luft-Luftkühlers 2 vorgesehen, die am besten in Figur 2 und 4 erkennbar sind. Die Befestigungsmittel 5 weisen zwei parallele, vertikale Rippen 6 auf, die tangential vom gerundenten Wasserkasten 4 abstehen. Die unteren, freien Enden der Rippen 6 sind gegeneinander abgewinkelt und bilden Einführschrägen 7, durch die beim Einführen von oben her der Luft-Luftkühler zentriert in das Befestigungsmittel 5′ eingeführt wird.

Dieses Befestigungsmittel 5′ ist über dem Befestigungsvorsprung 3 angeordnet, gabelförmig ausgebildet, ebenfalls mit dem Wasserkasten 4 des Luft-Wasserkühlers einstückig integriert und ist im wesentlichen durch zwei im Abstand parallel und vertikal verlaufende Rippen 8 gebildet, deren Enden in horizontal nach außen gerichteten Querrippen 9 übergehen, so daß das Befestigungsmittel 5′ einen Doppel-U-Querschnitt aufweist (Figur 2).

Mit Abstand, unterhalb des Befestigungsvorsprungs 3, ist zur Aufnahme eines eventuell auftretenden Kippmoments noch ein weiteres Befestigungsmittel 5˝ vorgesehen, sowie ein senkrechter, oben offener Aufnahmeschlitz 10.

Die Befestigungsmittel 5,5′,5˝ sind einstückig mit dem aus Kunststoff bestehenden Wasserkasten 11 des Luft-Wasserkühlers 1 hergestellt.

Die unten schräg aufeinanderzulaufenden Enden der Rippen 6 sind federnde Kunststoffzungen 12, die den von oben her eingeschobenen Luft-Luftkühler 2 zentrieren und halten.

Der Luft-Luftkühler 2 weist beidseitig jeweils einen aus Kunststoff bestehenden Luftkasten 13 auf, an dem einstückig angeformt Ladeluft-Anschlußstutzen 14 angeformt sind, die seitlich um den Luft-Wasserkühler 1 herumgeführt sind. Innen unterhalb der Ladeluft-Anschlußstutzen 14 ist jeweils ein Vorsprung 15 vorgesehen, der durch die Befestigungsmittel 5,5′ des Luft-Wasserkühlers 1 zentriert und gehalten ist. Ein solcher Vorsprung 15 wird durch zwei, im Abstand parallel zueinander angeordnete, vertikale Rippen 16 gebildet, die außen seitlich vorspringende Haltenasen 17 aufweisen, die im montierten Zustand auf den oberen Querrippen 9 des gabelförmigen Befestigungsmittels 5′ aufliegen. Diese Haltenasen 17 werden von den federnden Enden der Kunststoffzungen 12 bei der Montage federnd hinterschnappt und verhindern ein Anheben des Luft-Luftkühlers 2 gegenüber dem Luft-Wasserkühler 1.

Unterhalb des Vorsprunges 15 ist mit Abstand ein weiterer Vorsprung 15′ in Form eines L-Schenkels vorgesehen, der ebenfalls einstückig mit dem Luftkasten 13 integiert ist, wobei das abgewinkelte Ende dieses Vorsprungs 15′ im Aufnahmeschlitz 10 des weiteren Befestigungsmittels 5˝ aufgenommen ist und den Luft-Luftkühler 2 gegenüber dem Luft-Wasserkühler 1 im gewünschten Abstand fixiert. Etwa in gleicher Ebene sind am oberen Ende der Kühler 1, 2 noch obere Anlageflächen 18,18′ vorgesehen, durch die Beschleunigungskräfte und bei auftretenden Vibrationen entstehende Kräfte übertragen werden können.

Zur Montage des Luft-Luftkühlers 2 sind keinerlei Werkzeuge erforderlich. Der Luft-Luftkühler 2 wird einfach vor und oberhalb dem Luft-Wasserkühler 2 angesetzt und nach unten abgesenkt. Eine gegenseitige Lagekorrektur erfolgt selbsttätig durch die Einführschrägen 7 des Befestigungsmittels 5 in Verbindung mit dem Vorsprung 15.

## Patentansprüche

1. Wärmetauscher, zur Kühlung des Kühlwassers und der Ladeluft eines Verbrennungsmotors, mit einem Luft-Wasserkühler (1) für das Kühlwasser und einem Luft-Luftkühler (2) für die Kühlung der komprimierten Ladeluft, wobei der Luft-Luftkühler (2) in Luftdurchströmrichtung, vorzugsweise vor dem Luft-Wasserkühler (1) angeordnet ist und der Luft-Wasserkühler (1) seitliche Befestigungsvorsprünge (3) und/oder Ausnehmungen zur Befestigung an einem Trägergestell insbesondere eines Fahrzeugs aufweist, und zusätzliche Befestigungsmittel (5,5′,5˝) für den Luft-Luftkühler (2) aufweist, in die dieser mit zugeordneten Vorsprüngen (15,15′) eingehängt und gehalten ist, **dadurch gekennzeichnet**, daß die Vorsprünge (15) des Luft-Luftkühlers (2) mit dessen Ladeluft-Anschlußstutzen (14) integriert sind, wobei diese Ladeluft-Anschlußstutzen (14) den Luft-Luftkühler (2) seitlich überragen und am Luft-Wasserkühler (1) seitlich vorbeigeführt sind, daß ferner durch die Vorsprünge (15,15′) des Luft-Luftkühlers (2) und die zugeordneten Befestigungsmittel (5,5′,5˝) des Luft-Wasserkühlers (1) der Luft-Luftkühler (2) gegenüber dem Luft-Wasserkühler (1) zentriert gehalten ist.

2. Wärmetauscher nach Anspruch 1, dadurch gekennzeichnet, daß die Vorsprünge (15,15′) des Luftkühlers (2) zur Einhängung in den Befestigungmitteln (5,5′,5˝) des Luft-Wasserkühlers (1) etwa symmetrisch zum Schwerpunkt des Luft-Luftkühlers angeordnet sind.

3. Wärmetauscher nach Anspruch 1 oder 2, dadurch gekennzeichnet, daß die Befestigungsmittel (5,5′,5˝) des Luft-Wasserkühlers (1) Einführschrägen (7) aufweisen, durch die der Luft-Luftkühler (2) bei der Montage beim Einsetzen von oben her zentriert wird.

4. Wärmetauscher nach Anspruch 3, dadurch gekennzeichnet, daß mindestens die Enden der Einführschrägen (7), auch in montierter Endlage des Luft-Luftkühler (2), federnd seitlich an den Vorsprüngen (15) des Luft-Luftkühlers (2) liegen.

5. Wärmetauscher nach Anspruch 3, dadurch gekennzeichnet, daß die Enden der Einführschrägen (7) Haltenasen (17) der Vorsprünge (15) des Luft-Luftkühlers (2) hinterschnappen.

6. Wärmetauscher nach einem der Ansprüche 3 bis 5, dadurch gekennzeichnet, daß die Einführschrägen (7) durch elastisch, federnd ausgebildete Kunststoffzungen (12) gebildet sind.

7. Wärmetauscher nach Anspruch 6, dadurch gekennzeichnet, daß die als Einführschrägen (7) dienenden Kunststoffzungen (12) Verlängerungen von paralleleln Rippen (6) sind, die seitlich am Luft-Luftkühler (2) überstehen.

8. Wärmetauscher nach einem der Ansprüche 1 bis 7, dadurch gekennzeichnet, daß die Befestigungsmittel (5,5′,5˝) des Luft-Wasserkühlers (1) einstückig mit dem aus Kunststoff bestehenden Wasserkasten (11) integriert sind.

9. Wärmetauscher nach Anspruch 1, dadurch gekennzeichnet, daß die am Ladeluft-Anschlußstutzen (10) angeordneten Vorsprünge (15) zwei parallele im Abstand angeordnete Rippen (16) sind, die jeweils eine Haltenase (17) aufweisen, und daß die beiden Haltenasen (17) sich auf dem gabelförmig ausgebildeten Befestigungsmittel (5′) des Luft-Wasserkühlers (1) abstützen und der unter den Haltenasen (17) befindliche Teil der parallelen Rippen (16) zwischen dem gabelförmig ausgebildeten Befestigungsmittel (5′) aufgenommen ist.

10. Wärmetauscher nach Anspruch 9, dadurch gekennzeichnet, daß das gabelförmig ausgebildete Befestigungsmittel (5′) durch zwei im Querschnitt U-förmige Rippenvorsprünge gebildet ist, mit zwei parallel im Abstand voneinander angeordneten Rippen (8) mit an ihren Enden nach außen anschließenden Querrippen (9).

11. Wärmetauscher nach einem der Ansprüche 1 bis 10, dadurch gekennzeichnet, daß mit Abstand unterhalb dem Ladeluft-Anschlubstutzen (14) als weiteres Befestigungsmittel (5˝) ein nach oben offener Aufnahmeschlitz (10) am Luft-Wasserkühler (1) und am Luft-Luftkühler (2) als weiterer Vorsprung (15′) ein nach unten abgewinkelter L-Schenkel vorgesehen ist, dessen Ende vom oben offenen Aufnahmeschlitz (10) gehalten ist.

12. Wärmetauscher nach Anspruch 11, dadurch gekennzeichnet, daß der weitere Vorsprung (15′) in Form des L-Schenkels einstückig mit dem vorzugsweise aus Kunststoff bestehenden Luftkasten (13) des Luft-Luftkühlers (2) integriert ist.

13. Wärmetauscher nach einem der Ansprüche 1 bis 12, dadurch gekennzeichnet, daß am oberen Ende des Luft-Wasserkühlers (1) und des Luft-Luftkühlers (2) einander zugeordnete vertikale Anlageflächen (18,18′) vorgesehen sind.

## Claims

1. A heat exchanger assembly for cooling water and charge-air of an internal combustion engine, comprising an air-to-water cooler (1) for the cooling of the water and an air-to-air cooler (2) for the cooling of the charge-air, the air-to-air cooler (2) being arranged in an air-flow direction preferably in front of the air-to-water cooler (1) and the air-to-water cooler (1) including lateral fixing projections (3) and/or recesses for securing to a supporting frame especially of a vehicle and additional fixing means (5,5′,5˝) for the air-to-air cooler (2) into which fixing means the air-to-air cooler with its corresponding projections (15,15′) is nested and held, characterized in that the projections (15) of the air-to-air cooler (2) are integrated with its charge-air connecting branch (14), this charge-air connecting branch (14) protruding laterally beyond the air-to-air cooler (2) and being run laterally past the air-to-water cooler (1), and that the air-to-air cooler (2) is held in a centered manner relative to the air-to-water cooler (1) by means of the projections (15,15′) of the air-to-air cooler (2) and the corresponding fixing means (5,5′,5˝) of the air-to-water cooler (1).

2. The heat exchanger as claimed in claim 1, characterized in that the projections (15,15′) of the air-to-air cooler (2) for nesting in the fixing means (5,5′,5˝) of the air-to-water cooler (1) are arranged approximately symmetrically to the center of gravity of the air-to-air cooler.

3. The heat exchanger as claimed in claim 1 or 2, characterized in that the fixing means (5,5′,5˝) of the air-to-water cooler (1) respectively include inclined sloping insertion surfaces (7), by which the air-to-air cooler (2) is centered on assembly and on inserting from above.

4. The heat exchanger as claimed in claim 3, characterized in that at least the ends of the inclined sloping insertion surfaces (7) bear laterally in a flexible manner against the projections (15) of the air-to-air cooler (2) also in the final assembled position of the heat cooler (2).

5. The heat exchanger as claimed in claim 3, characterized in that the ends of the inclined sloping insertion surfaces (7) snap behind retaining lugs (17) of the projections (15) of the air-to-air cooler (2).

6. The heat exchanger as claimed in any one of claims 3 to 5, characterized in that the inclined sloping insertion surface (7) are formed by elastic and flexible plastic tongues (12).

7. The heat exchanger as claimed in claim 6, characterized in that the plastic tongues (12) serving as inclined sloping insertion surfaces (7) are extensions of parallel ribs (6) which protrude laterally from the air-to-water cooler (1).

8. The heat exchanger as claimed in any one of claims 1 to 7, characterized in that the fixing means (5,5′,5˝) of the air-to-water cooler (1) are integrated in on piece with a water tank (11) made of plastic.

9. The heat exchanger as claimed in claim 1, characterized in that the projections (15) provided at the charge-air connecting branch (14) include two ribs (16) arranged in parallel at a distance apart and each comprising a retaining lug (17), and that the two retaining lugs (17) are supported on the fork-shaped fixing means (5′) of the air-to-water cooler (1) and that part of the parallel ribs (16) located below the retaining lugs (17) is accommodated between the fork-shaped fixing means (5′).

10. The heat exchanger as claimed in claim 9, characterized in that the fork-shaped fixing means (5′9 is formed by two rib protusions each being U-shaped in cross-section and includes two ribs (8) arranged in parallel at a distance from one another and having transverse ribs (9) at outside ends.

11. The heat exchanger as claimed in any one of claim 1 to 10, characterized in that as a further fixing means (5˝) at the air-to-water cooler (1) an accomodation slot (10) arranged at a distance below the charge-air connecting branch (14) and being open at the top and as a further projection (15′) at the air-to-air cooler (2) a L-leg angled downward the end of which being held by the accommodation slot (10) being open at the top are provided.

12. The heat exchanger as claimed in claim 11, characterized in that the further projection (15′) being the L-leg is integrated in one piece with the water tank (11) preferably made of plastic of the air-to-air cooler (2).

13. The heat exchanger as claimed in any one of claims 1 to 12, characterized in that vertical bearing surfaces (18,18′) arranged with respect to one another are provided at the top end of the air-to-water cooler (1) and the air-to-air cooler (2) respectively.

## Revendications

1. Echangeur de chaleur destiné à refroidir l'eau de refroidissement et l'air de charge d'un moteur à combustion interne, comportant un refroidisseur air-eau (1) pour l'eau de refroidissement et un refroidisseur air-air (2) pour le refroidissement de l'air de charge comprimé, le refroidisseur air-air (2) étant monté, dans le sens d'écoulement de l'air, de préférence en amont du refroidisseur air-eau (1) et le refroidisseur air-eau (1) comportant des fixations saillantes (3) latérales et/ou des évidements, en vue de sa fixation sur un châssis de support, en particulier d'un véhicule automobile, et comportant des moyens de fixation (5, 5′, 5˝) supplémentaires pour le refroidisseur air-air (2) dans lesquels celui-ci est accroché et maintenu par des parties saillantes (15, 15′) correspondantes, caractérisé en ce que les parties saillantes (15) du refroidisseur air-air (2) sont intégrées avec ses tubulures de branchement d'air de charge (14), ces tubulures (14) dépassant latéralement du refroidisseur air-air (2) et passant sur le côté du refroidisseur air-eau (1), en ce qu'en outre le refroidisseur air-air (2) est maintenu centré par rapport au refroidisseur air-eau (1), par les parties saillantes (15, 15′) du refroidisseur air-air (2) et les moyens de fixation (5, 5′, 5˝) correspondants du refroidisseur air-eau (1).

2. Echangeur de chaleur selon la revendication 1, caractérisé en ce que les parties saillantes (15, 15′) du refroidisseur à air (2), destinées à s'accrocher dans les moyens de fixation (5, 5′, 5˝) du refroidisseur air-eau (1), sont à peu près symétriques par rapport au centre de gravité du refroidisseur air-air.

3. Echangeur de chaleur selon la revendication 1 ou 2, caractérisé en ce que les moyens de fixation (5, 5′, 5˝) du refroidisseur air-eau (1) présentent des parties obliques d'introduction (7) par lesquelles le refroidisseur air-air (2), introduit à partir du haut, est centré lors du montage.

4. Echangeur de chaleur selon la revendication 3, caractérisé en ce qu'au moins les extrémités des parties obliques d'introduction (7), y compris dans la position définitive de montage du refroidisseur air-air (2), s'appliquent en formant ressort sur le côté des parties saillantes (15) du refroidisseur air-air (2).

5. Echangeur de chaleur selon la revendication 3, caractérisé en ce que les extrémités des parties obliques d'introduction (7) se clipsent derrière des ergots de maintien (17) des parties saillantes (15) du refroidisseur air-air (2).

6. Echangeur de chaleur selon l'une des revendications 3 à 5, caractérisé en ce que les parties obliques d'introduction (7) sont formées par des languettes en matière plastique (12) élastiques, formant ressort.

7. Echangeur de chaleur selon la revendication 6, caractérisé en ce que les languettes en matière plastique (12), servant de surfaces obliques d'introduction (7), sont des prolongements de nervures parallèles (6) qui dépassent latéralement du refroidisseur air-air (2).

8. Echangeur de chaleur selon l'une des revendications 1 à 7, caractérisé en ce que les moyens de fixation (5, 5′, 5˝) du refroidisseur air-eau (1) sont intégrés d'une seule pièce avec le caisson à eau (11) en matière plastique.

9. Echangeur de chaleur selon la revendication 1, caractérisé en ce que les parties saillantes (15), placées sur la tubulure de branchement d'air de charge (10), sont deux nervures (16) parallèles et espacées qui comportent chacune un ergot de maintien (17) et en ce que les deux ergots de maintien (17) prennent appui sur le moyen de fixation (5′), en forme de fourche, du refroidisseur air-eau (1) et la partie, se trouvant sous les ergots de maintien (17), des nervures parallèles (16), est logée entre le moyen de fixation (5′) en fourche.

10. Echangeur de chaleur selon la revendication 9, caractérisé en ce que le moyen de fixation (5′) en fourche est formé par deux nervures saillantes de section transversale en U, avec deux nervures (8) parallèles et espacées l'une de l'autre avec des nervures transversales (9) se raccordant, vers l'extérieur, à leurs extrémités.

11. Echangeur de chaleur selon l'une des revendications 1 à 10, caractérisé en ce qu'il est prévu, à une certaine distance, au-dessous de la tubulure de branchement d'air de charge (14), comme autre moyen de fixation (5˝), une fente de logement (10), ouverte vers le haut, sur le refroidisseur air-eau (1), et, comme autre partie saillante (15′), sur le refroidisseur air-air (2), une branche de L coudée vers le bas dont l'extrémité est maintenue par la fente de logement (10) ouverte à sa partie supérieure.

12. Echangeur de chaleur selon la revendication 11, caractérisé en ce que l'autre partie saillante (15') en forme de branche de L est intégrée, d'une seule pièce, avec le caisson à air (13), de préférence en matière plastique, du refroidisseur air-air (2).

13. Echangeur de chaleur selon l'une des revendications 1 à 12, caractérisé en ce qu'il est prévu des surfaces d'application (18, 18′) verticales, associées les unes aux autres, à l'extrémité supérieure du refroidisseur air-eau (1) et du refroidisseur air-air (2).
